# EUROPEAN PATENT APPLICATION

(11) **EP 4 483 708 A1**
(43) Date of publication of application: **01.01.2025**
(21) Application number: 23759077.3
(22) Date of filing: 16.02.2023
(51) Int. Cl.: A01G 20/30, A01D 67/00

(54) **LAWN MOWER**

(30) Priority: 23.02.2022 CN 202220376000 U; 09.03.2022 CN 202220491943 U
(71) Applicant: Greenworks (Jiangsu) Co., Ltd., Changzhou, Jiangsu 213023 (CN)
(72) Inventor: WEI, Qunli, hangzhou, Jiangsu 213023 (CN); SUN, Yansheng, hangzhou, Jiangsu 213023 (CN); SHI, Dongdong, hangzhou, Jiangsu 213023 (CN); JI, Qin, hangzhou, Jiangsu 213023 (CN); SHI, Qinghua, hangzhou, Jiangsu 213023 (CN)
(74) Representative: Bergenstråhle & Partners AB
(86) International application number: PCT/CN2023/076401
(87) International publication number: WO 2023/160452

(57) **Abstract**

A mower includes a frame, a working assembly and a platform assembly. The working assembly is connected with the frame. The platform assembly is mounted on the frame. The platform assembly includes a supporting plate, a platform and a damper. The supporting plate is fixedly connected with the frame. One side of the platform is rotatably connected with the frame and located above the supporting plate. The damper is mounted on the supporting plate and located between the platform and the supporting plate.

## Description

### CROSS REFERENCE TO RELATED APPLICATION

The present application is a continuation Application of PCT application No. PCT/CN2023/076401 filed on February 16, 2023, which claims the benefit of CN202220491943.9 filed on March 09, 2022, and CN202220376000.1 filed on February 23, 2022. All the above are hereby incorporated by reference for all purposes.

### TECHNICAL FIELD

The disclosure relates a technical field of power tools, especially relates to a mower.

### BACKGROUND

Mowers are mechanical tools used to mow lawns, vegetation, etc. The platform of the conventional mower can only be used under conditions where the lawn is relatively flat and there are fewer obstacles. When used under conditions where the lawn is uneven and there are more obstacles, the conventional structure is not sufficient to effectively reduce the up and down shock frequency of the driver, which will increase the difficulty of the driver's control of the machine, easily cause misoperation, and pose a safety hazard. As the standing mower is not sufficient to effectively reduce the up and down shock frequency of the driver, the traditional platform assembly can no longer meet customers' requirements for standing mowers.

In addition, general mowers have lawn crushing working condition and lawn discharging working condition. When in the lawn crushing working condition, a blocking plate structure needs to be mounted on the mower, and when the mower is in the lawn discharging working condition, a lawn discharging plate needs to be mounted on the mower. In the traditional mower structure, when switching from the lawn crushing function to the lawn discharging function, the driver must get off the vehicle during the operation, use tools to remove the cutting deck baffle, and then put down the lawn discharging plate, which enables the mower to be very inconvenient to use.

### SUMMARY

The disclosure provides a mower to improve a problem that conventional mowers are not able to effectively reduce an up and down shock frequency of a driver when used in conditions where the lawn is uneven and there are many road obstacles, thereby increasing an operation difficulty of a machine to the driver, easily causing a misoperation, and posing a safety hazard.

The disclosure further provides the mower. The mower includes a frame, a working assembly and a platform assembly.

The working assembly is connected with the frame.

The platform assembly is connected to the frame, and includes a supporting plate, a platform and a damper.

The supporting plate is fixedly connected with the frame.
a platform, one side of the platform rotatably connected with the frame and located above the supporting plate; and

The damper is mounted on the supporting plate and located between the platform and the supporting plate.

In an embodiment of the disclosure, the damper includes at least a first damper and a second damper, and the first damper and the second damper are respectively mounted on two sides of the supporting plate.

In an embodiment of the disclosure, a distance L1 between an orthographic projection on the supporting plate of a rotation center of the platform rotatably connected with the frame and the damper is set between 180 mm and 200 mm.

In an embodiment of the disclosure, a plurality of mounting holes is arranged on one side of the platform, and the damper is mounted on different mounting holes through fixing components.

In an embodiment of the disclosure, the plurality of mounting holes is arranged in a straight line along a width direction of the supporting plate, and a maximum distance L2 between two of the plurality of mounting holes is set to 100 mm.

In an embodiment of the disclosure, when a driver stands on the platform, a distance L3 between an orthographic projection on the supporting plate of the rotation center of the platform rotatably connected with the frame and the driver's center of gravity is set between 80 mm and 100 mm.

In an embodiment of the disclosure, the mower further includes a compression spring assembly, which is mounted between the platform and the supporting plate, and located between the first damper and the second damper.

In an embodiment of the disclosure, the compression spring assembly includes a pressing plate and a spring, a first end of the spring is fixedly connected with the pressing plate through a first bolt, and a second end of the spring is fixedly connected with the supporting plate through a second bolt.

In an embodiment of the disclosure, the spring includes at least a first spring and a second spring, and the first spring and the second spring are symmetrically arranged on two sides of the pressing plate with respect to a center line of the pressing plate.

In an embodiment of the disclosure, the mower further includes an elastic component, which is connected between the frame and the platform.

In an embodiment of the disclosure, a first end of the elastic component is fixedly mounted on the platform through a first limiting bolt, and a second end of the elastic component is fixedly mounted on the frame through a second limiting bolt, and the first limiting bolt is located on a side of the platform away from a rotation shaft of the platform.

In an embodiment of the disclosure, the mower further includes an operator presence switch, arranged on the platform assembly.

In an embodiment of the disclosure, the working assembly includes a cutting deck, a cutting deck baffle, a lawn discharging plate and a linkage adjustment mechanism.

The cutting deck is connected on the frame and one side of the cutting deck provided with an opening.

The cutting deck baffle is rotatably mounted at the opening, and when the cutting deck baffle is located at the opening to close the opening, the mower is in a lawn crushing state;

The lawn discharging plate is rotatably mounted with the cutting deck through a rotation shaft of the lawn discharging plate.

The linkage adjustment mechanism is mounted on the frame, connected with the cutting deck baffle and the lawn discharging plate, and includes a connecting rod mechanism. The connecting rod mechanism is connected between the cutting deck baffle and the lawn discharging plate. The linkage adjustment mechanism is configured to adjust positions of the lawn discharging plate and the cutting deck baffle through the connecting rod mechansim to enable the mower to switch between the lawn crushing state and a lawn discharging state.

In an embodiment of the disclosure, in the lawn crushing state, an angle between the cutting deck baffle and the lawn discharging plate is set between 150° and 185°.

In an embodiment of the disclosure, when the mower switches from the lawn crushing state to the lawn discharging state, an upward flipping angle of the cutting deck baffle is set between 90° and 98°, and a downward flipping angle of the lawn discharging plate is set between 65° and 96°.

In an embodiment of the disclosure, the connecting rod mechanism includes a first connecting rod, a second connecting rod and a third connecting rod, a first end of the second connecting rod is rotatably connected with the first connecting rod, a second end of the second connecting rod is rotatably connected with the third connecting rod, the first connecting rod is connected with the rotation shaft of the lawn discharging plate, and the third connecting rod is fixedly connected with the cutting deck baffle.

In an embodiment of the disclosure, the first connecting rod includes a first part and a second part, an angle is formed between the first part and the second part, the first part and the second part are in an integrally formed structure, a first end of the second part is connected with the rotation shaft of the lawn discharging plate, and a second end of the second part is connected with the second connecting rod.

In an embodiment of the disclosure, a length of the second part is set between 20 mm and 30 mm, a length of the second connecting rod is set between 35 mm and 45 mm, and a length of the third connecting rod is set between 25 mm and 35 mm.

In an embodiment of the disclosure, the linkage adjustment mechanism further includes a reset tension spring, a first end of the reset tension spring is connected with an outer side of the cutting deck, and a second end of the reset tension spring is connected with an end of the first part away from the second part.

In an embodiment of the disclosure, the linkage adjustment mechanism further includes a pulling wire and a handle assembly, a first end of the pulling wire is fixedly connected with the first part, a second end of the pulling wire is connected with the handle assembly, and the handle assembly is mounted on a control base assembly of the mower.

One or more embodiments of the disclosure provide the mower, which reduces a number of components of the platform assembly and eliminates two rubber blocks that play a limiting role. The damper is mounted between the platform and the supporting plate, so that the entire platform assembly can provide an energy dissipation and shock reduction functions during an operation of a standing mower. Compared with a performance of traditional platform assemblies under bumpy conditions, this platform assembly can provide a more effective shock reduction function, which brings customers a more perfect experience.

One or more embodiments of the disclosure provide the mower. The lawn discharging plate and the cutting deck baffle are mounted on the cutting deck. The lawn discharging plate and the cutting deck baffle are linked and adjusted through the linkage adjustment mechanism, so that the cutting deck baffle can be switched on an operating deck without the driver getting off a mower, and the lawn discharging plate work synchronously, which means that when the cutting deck baffle is not needed, the cutting deck baffle does not need to be removed, only the cutting deck baffle needs to be opened and the lawn discharging plate is lowered at the same time. When the cutting deck baffle is needed, the cutting deck baffle may be directly lowered and the lawn discharging plate may be raised at the same time. The disclosure does not use tools to disassemble the cutting deck baffle, and the cutting deck baffle and the lawn discharging plate are linked. When the blocking plate is not working, the lawn discharging plate is working. When the lawn discharging plate is not working, the cutting deck baffle is working.

### BRIEF DESCRIPTION OF THE DRAWINGS

In order to explain technical solutions of embodiments of the disclosure more clearly, the following will briefly introduce drawings used in a description of the embodiments or the conventional art. Obviously, the drawings in the following description are only some embodiments of the disclosure. For those of ordinary skill in the art, other drawings may be obtained based on these drawings without creative work.
FIG. 1 is a first schematic structural view of a mower according to at least one embodiment of the disclosure.
FIG. 2 is a schematic structural view of a platform assembly according to at least one embodiment of the disclosure.
FIG. 3 is a schematic partial structural view of the platform assembly according to at least one embodiment of the disclosure.
FIG. 4 is a schematic exploded view of the platform assembly according to at least one embodiment of the disclosure.
FIG. 5 is a schematic view of the platform assembly in an initial state according to at least one embodiment of the disclosure.
FIG. 6 is a schematic view of the platform assembly in a static balance state according to at least one embodiment of the disclosure.
FIG. 7 is a schematic view of the platform assembly in a state of being in an impact load limiting position according to at least one embodiment of the disclosure.
FIG. 8 is a second schematic structural view of the mower according to at least one embodiment of the disclosure.
FIG. 9 is a schematic structural view of a linkage adjustment mechanism in the mower according to at least one embodiment of the disclosure.
FIG. 10 is a schematic structural view of a connecting rod mechanism in the mower according to at least one embodiment of the disclosure.
FIG. 11 is an enlarged schematic structural view of an area A in FIG. 10.
FIG. 12 is a schematic partial exploded view of the connecting rod mechanism in the linkage adjustment mechanism according to at least one embodiment of the disclosure.
FIG. 13 is a schematic partial exploded view of a handle assembly in the linkage adjustment mechanism according to at least one embodiment of the disclosure.
FIG. 14 is a schematic partial structural view of the mower in a lawn discharging state according to at least one embodiment of the disclosure.

### PART NUMBER DESCRIPTION:

10-Frame; 20-driving wheel; 30-working assembly; 40-platform assembly; 41-supporting plate; 411-mounting hole; 42-platform; 421-bolt; 43-damper; 44-compression spring assembly; 45-elastic component; 4201-limiting component; 441-pressing plate; 442-spring; 443-operator presence switch; 444-first bolt; 445-second bolt; 451-first limiting bolt; 452-second limiting bolt; 50-cutting deck; 60-cutting deck baffle; 70-lawn discharging plate; 80-linkage adjustment mechanism; 501-opening; 502-bracket; 503-lifting eye structure; 71-rotation shaft; 81-connecting rod mechanism; 82-reset tension spring; 83-pulling wire; 84-handle assembly; 841-boss; 811-first connecting rod; 812-second connecting rod; 813-third connecting rod; 8111-first part; 8112-second part; 1001-control base assembly; 1002-positioning hole.

### DETAILED DESCRIPTION

The following describes the implementation of the disclosure through specific embodiments, and those skilled in the art can easily understand other advantages and effects of the disclosure from the content disclosed in this specification. The disclosure may also be implemented or applied through other different specific embodiments. Various details in this specification may also be modified or changed based on different viewpoints and applications without departing from the disclosure.

It should be noted that drawings provided in the embodiments are only illustrative of a basic idea of the disclosure. The drawings only show assemblies related to the disclosure instead of drawing according to the number, shape and size of the assemblies in actual implementation. In actual implementation, the type, quantity and ratio of each assembly may be changed at will, and a layout of the assemblies may also be more complicated.

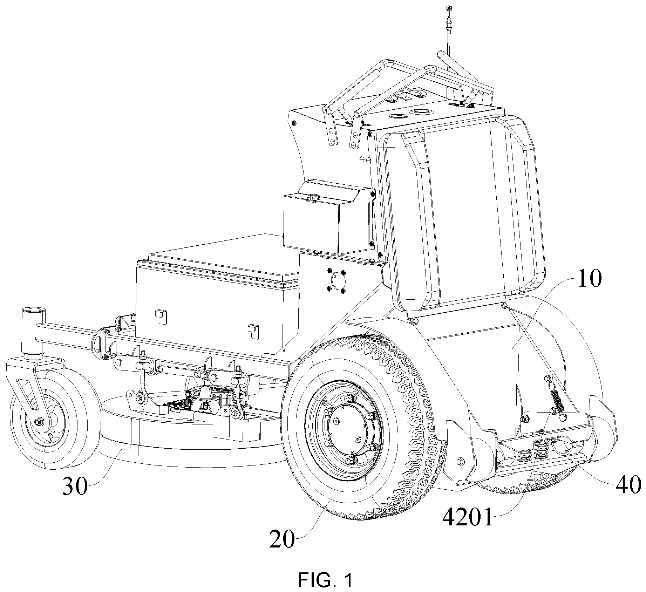

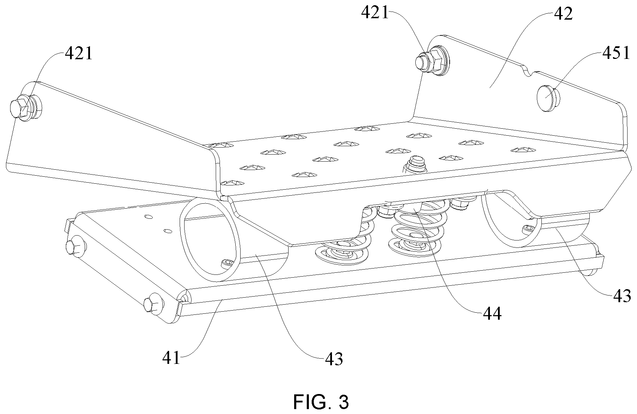

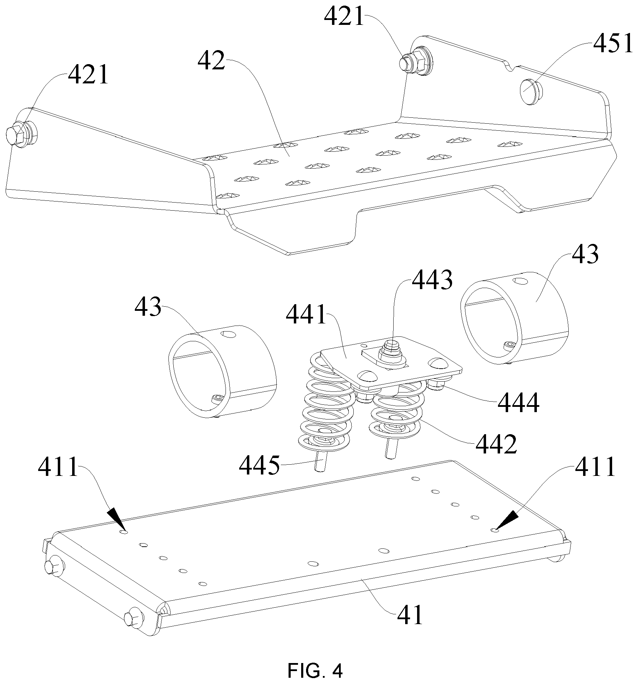

The disclosure proposes a mower to improve a problem that when a lawn is uneven and there are many obstacles, the mower with a traditional structure is not enough to effectively reduce an up and down shock frequency of a driver, which will increase a difficulty of the driver to control a machine and pose a safety hazard. Please refer to FIG. 1 through FIG. 4. In this embodiment, the mower includes a frame 10, a driving wheel 20, a working assembly 30 and a platform assembly 40. In this embodiment, two driving wheels 20 are arranged on the mower, mounted at two ends of a rear side of the frame 10, and used to drive the mower to walk. Of course, the driving wheel 20 may further be mounted at a front end or other position of the frame 10. The working assembly 30 is mounted at a bottom of the frame 10. In some other embodiments, the working assembly 30 may further be mounted at the front end, a rear end or a side of the frame 10, and the platform assembly 40 is connected to the rear side of the frame 10.

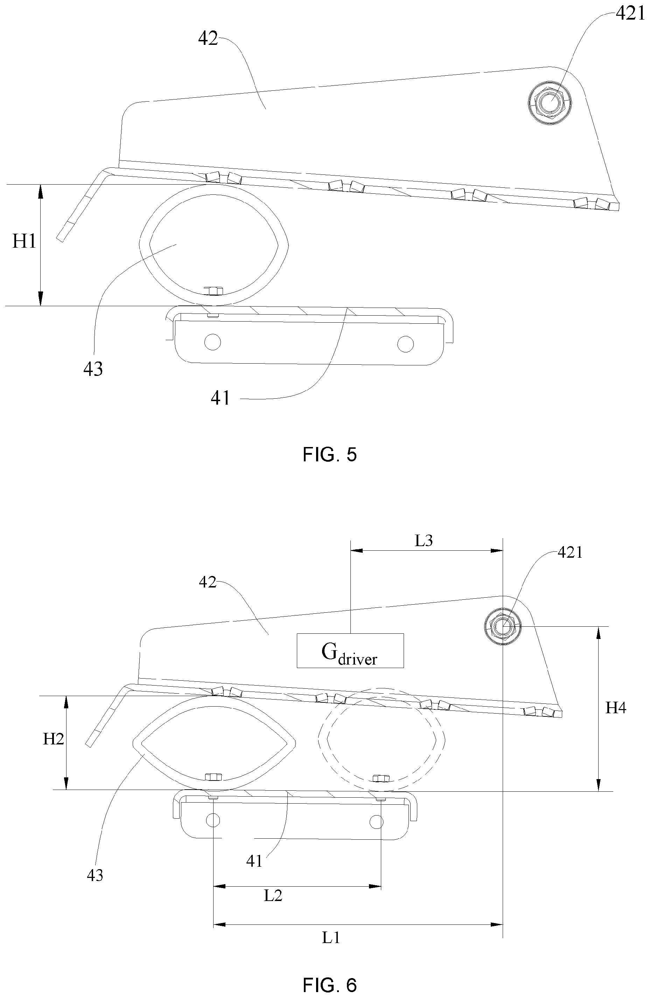

Please refer to FIG. 1 through FIG. 5. In this embodiment, the platform assembly 40 includes a supporting plate 41, a supporting plate 42 and a damper 43. The supporting plate 41 is fixedly mounted on the frame 10, one side of the platform 42 is rotatably mounted on the frame 10, and the platform 42 is located above the supporting plate 41. In this embodiment, a rotation axis between the platform 42 and the frame 10 is arranged parallel to a rotation axis of the driving wheel 20, and the damper 43 is mounted on the supporting plate 41 and is located between the platform 42 and the supporting plate 41.

Please refer to FIG. 1 through FIG. 5. In this embodiment, the supporting plate 41 is fixedly mounted on the frame 10 and is located between the two driving wheels 20. At least one damper 43 is provided. Further, the damper 43 at least includes a first damper and a second damper. The first damper and the second damper are respectively mounted on two sides of the supporting plate 41 close to the two driving wheels 20. A distance L1 between an orthographic projection on the supporting plate 41 of a rotation center of the platform 42 rotatably connected with the frame 10 and the damper 43 is set between 180 mm and 200 mm. In an embodiment, a distance between the orthographic projection of the rotation center on the supporting plate 41 and a center of the damper 43 is L1, and is set between 180 mm and 200 mm.

Please refer to FIG. 1 through FIG. 5. In this embodiment, a plurality of mounting holes 411 is respectively arranged on two sides of the supporting plate 41 for mounting the damper 43. The plurality of mounting holes 411 is arranged in a straight line and along a width direction of the supporting plate 41, and a farthest distance L2 between two of the plurality of mounting holes 411 is set to 100 mm. In this embodiment, the damper 43 may be mounted on different mounting holes 411 through a fixing component, and the fixing component is, for example, set to a fixing bolt, so as to change the distance L1 between the orthographic projection on the supporting plate 41 of the rotation center of the platform 42 rotatably connected with the frame 10 and the damper 43.

Please refer to FIG. 1 through FIG. 5. In this embodiment, the platform assembly 40 further includes a compression spring assembly 44. The compression spring assembly 44 is mounted between the platform 42 and the supporting plate 41, and connected with the supporting plate 44. In an embodiment, the compression spring assembly 44 is located in a middle of the supporting plate 41 and between the first damper and the second damper. In an embodiment, the compression spring assembly 44 includes a pressing plate 441 and a spring 442. A first end of the spring 442 is fixedly connected with the compression plate 441 through a first bolt 444, and a second end of the spring 442 is fixedly connected with the supporting plate 41 through second bolt 445, so that the compression spring assembly 44 is mounted between the supporting plate 41 and the platform 42. In this embodiment, the spring 442 includes at least a first spring and a second spring, and the first spring and the second spring are symmetrically arranged on two sides of the pressing plate 441 about a center line of the pressing plate 441. The center line is perpendicular to the rotation axis between the platform 42 and the frame 10 in space to ensure its structural stability. In addition, the compression spring assembly 44 may also play a shock-absorbing role, buffering an impact caused by bumps.

Please refer to FIG. 1 through FIG. 5. In this embodiment, one side of the platform 42 is rotatably connected with the frame 10 through the rotation shaft of the platform. In an embodiment, two ends of one side of the platform 42 are respectively connected with the frame 10 through bolts 421, and the bolts 421 on the two ends are located on a same straight line, which means that the bolts 421 on the two ends are the rotation shaft of the platform 42, and a straight line formed by the bolts 421 on the two ends is an axis of the rotation shaft of the platform 42. When a driver stands on the platform, a distance L3 between an orthographic projection on the supporting plate 41 of a rotation center of the platform 42 rotatably connected with the frame 10 and the driver's center of gravity is set between 80 mm and 100 mm.

Please refer to FIG. 1 through FIG. 5. In this embodiment, the platform assembly 40 further includes an elastic component 45. The elastic component 45 is connected between the frame 10 and the platform 42. In this embodiment, the elastic component 45 is, for example, configured as a tension spring, which is connected between the frame 10 and the platform 42. In some other embodiments, the elastic component 45 may also be configured as a gas spring, a rubber or other elastic structures.

Please refer to FIG. 1 through FIG. 5. A first end of the elastic component 45 is fixedly mounted on the platform 42 through a first limiting bolt 451, and a second end of the elastic component 45 is fixedly mounted on the frame 10 through a second limiting bolt 452, and the first limiting bolt 451 is located on a side of the platform 42 away from the rotation shaft. In an embodiment, the platform 42 returns to its initial position under an action of the elastic component 45 when no external force is applied to the platform 42 to press downward. Further, in this embodiment, a limiting component 4021 is further arranged on the frame 10, and the platform 42 is limited on the frame 10 through the limiting component 4201 to prevent the platform 42 from being pulled upward excessively under a tension of the elastic component 45. The limiting component 4201 may be set as the bolt. Of course, in some other embodiments, it may also be limited by other structures, such as a latch, etc. An operator presence switch 443 is further arranged on the platform assembly 40. The platform 42 is matched with the operator presence switch 443. When the driver steps on the platform 42, the platform 42 is pressed down, the damper 43 and the compression spring assembly 44 are compressed, and the operator presence switch 443 is triggered, so that a circuit is connected, the machine may start to run, and the damper 43 also starts to work to provide a more effective shock reduction function at the same time. When the operator is not in place, the operator presence switch 443 is not triggered, and the machine cannot run.

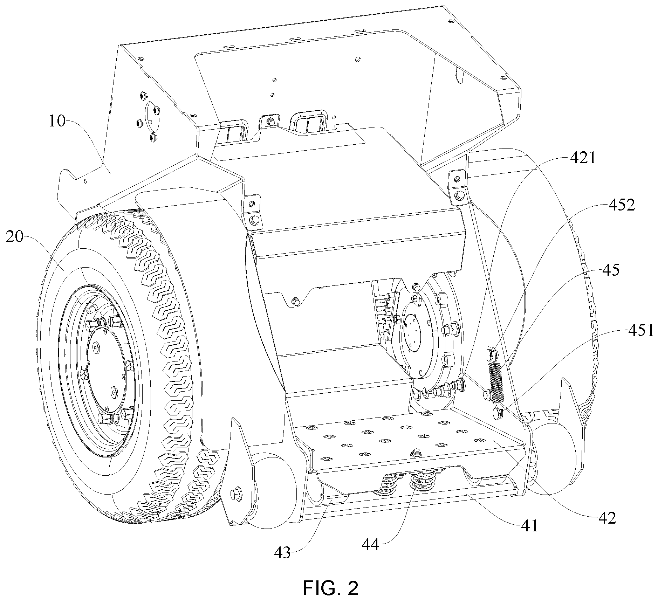

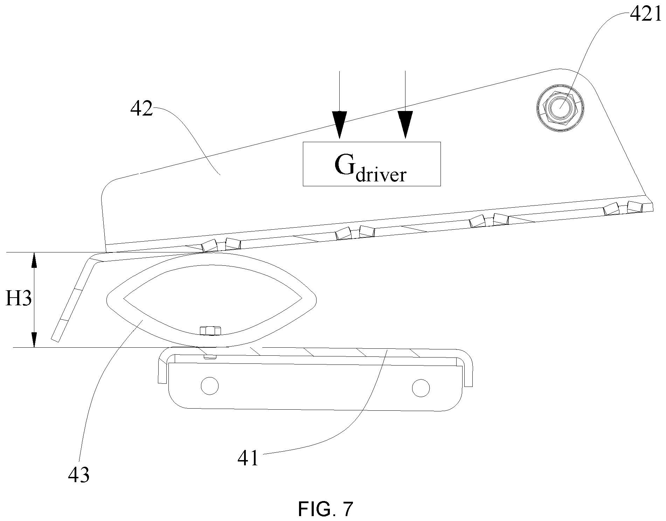

Please refer to FIG. 2, FIG. 5 and FIG. 7. In this embodiment, when the driver is not standing on the mower, the platform assembly 40 is in an initial state, an applied load is zero, and the damper 43 is in the initial state at this time with a height of H1. When the driver stands on the mower, the platform assembly is in a static balance state, in which the load is the driver's gravity G. In this embodiment, the driver's weight is calculated as 90kg to 110kg, and the damper 43 provides a supporting reaction force F. The supporting reaction force F may be solved according to a moment balance equation F×L1=G×L3. Where, L1 is the distance between the orthographic projection on the supporting plate 41 of the rotation center of platform 42 rotatably connected with the frame 10 and the damper 43, and the distance L1 is, for example, set between 180 mm and 200 mm. L3 is the distance between the orthographic projection on the supporting plate 41 of the rotation center of platform 42 rotatably connected with the frame 10 and the driver's the center of gravity, and the distance L3 is, for example, set between 80 mm and 100 mm. At this time, the damper 43 is in a balanced state, and a height of the damper is H2, which means that H2 is a height parameter of the damper in the balanced state, and a compression distance ΔH of the damper 43 may be obtained to be H1-H2. In this embodiment, ΔH is, for example, set between 15 mm and 25 mm, where H4 is a distance from the rotation center of a rotation connection between the platform 42 and the frame 10 to the supporting plate 41. Where, the farthest distance L2 between the plurality of the mounting holes 411 on the supporting plate 41 is set to 100 mm, which means that the distance L2 is an adjustment range of a mounting position of the damper 43, and may be slightly adjusted for the drivers of different weights and lawns of different working conditions so that it may be mounted on the different mounting holes 411 to change the distance L1 between the orthographic projection of on the supporting plate 41 of the rotation center of platform 42 rotatably connected with the frame 10 and the damper 43, thereby meeting differentiated needs of customers. It should be further noted that, when the driver operates the mower and it is bumpy, the platform assembly 40 is in the state of the impact load limiting position. The damper in the platform assembly 40 may effectively consume kinetic energy generated by road bumps and reduce the up and down shock frequency of the driver when a standing mower is in a working state.

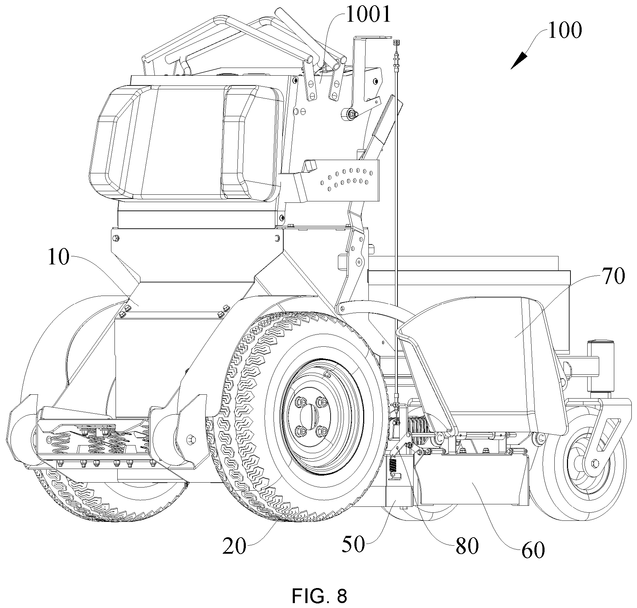

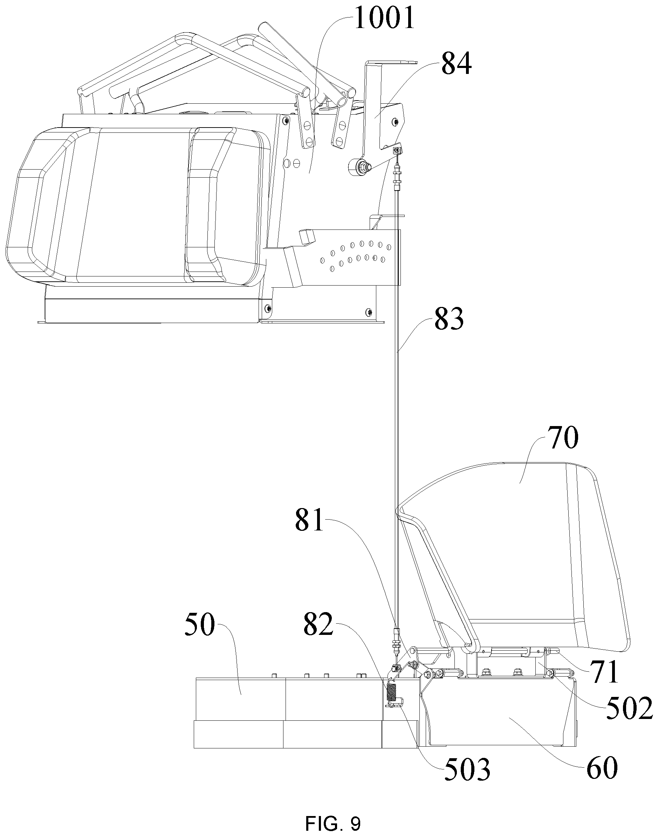

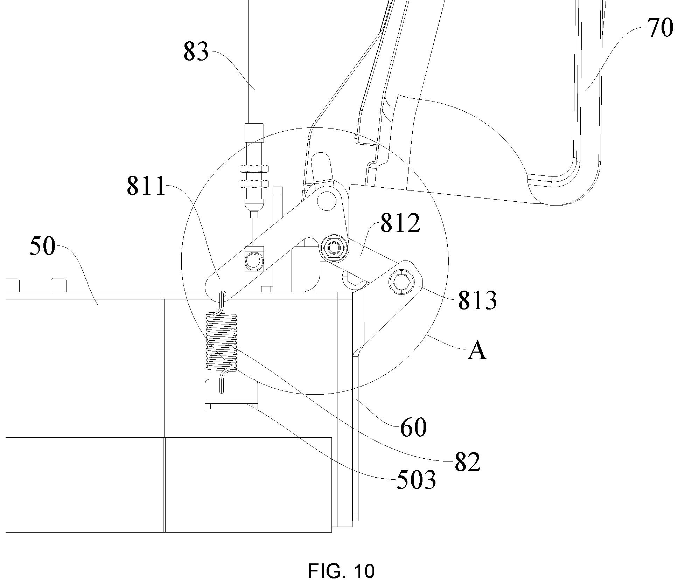

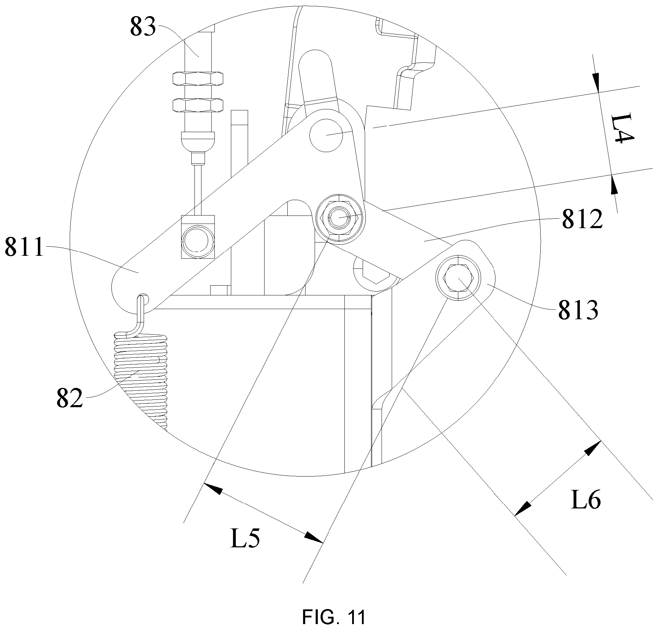

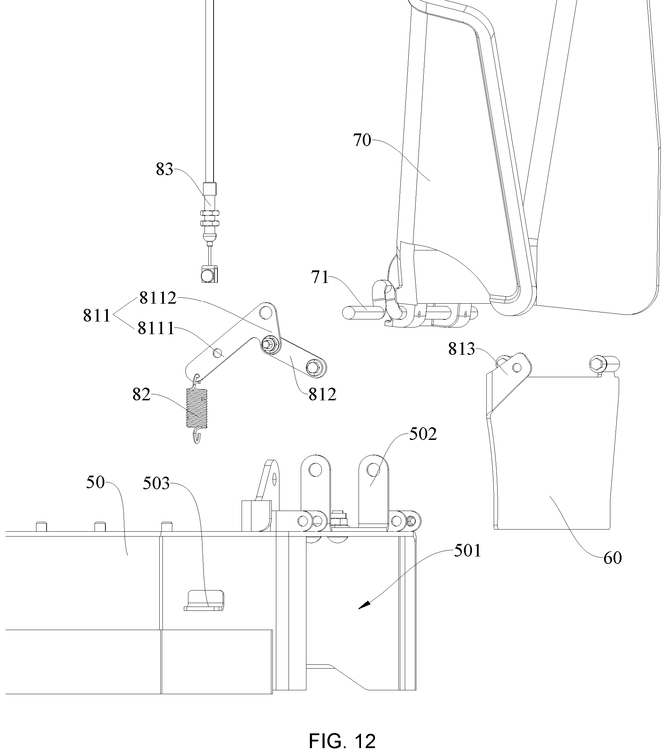

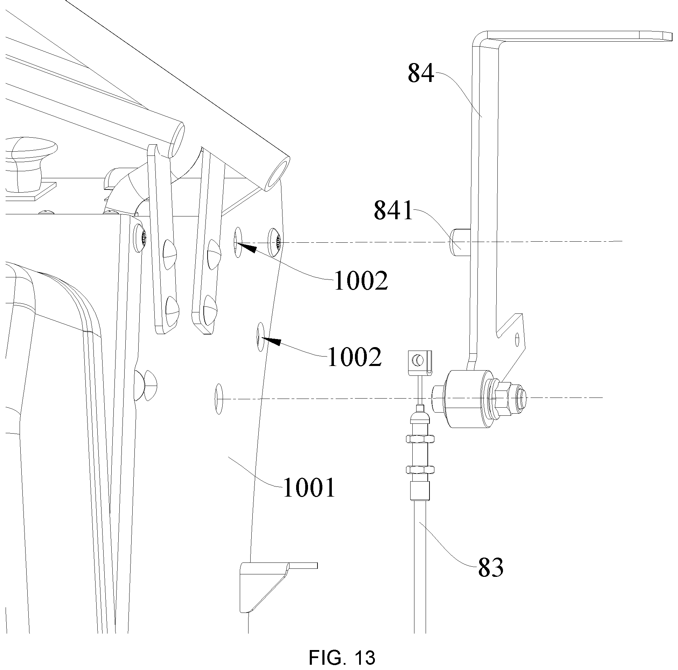

In addition, in this embodiment, a linkage adjustment is formed between a lawn discharging plate 70 and a cutting deck baffle 60 on the mower, so that the cutting deck baffle 60 may be switched on an operating deck without the driver getting off the mower, and the lawn discharging plate 70 works synchronously when the cutting deck baffle 60 is switched. Please refer to FIG. 8 through FIG. 14. In this embodiment, the working assembly 30 includes a cutting deck 50, a cutting deck baffle 60, a lawn discharging plate 70 and a linkage adjustment mechanism 80. The driving wheel 20 is mounted at the bottom of the frame 10 to move the mower 100. The cutting deck 50 is connected on the frame 10. In this embodiment, the cutting deck 50 is, for example, mounted at the bottom of the frame 10, and a cutting tool assembly is mounted in the cutting deck 50 for mowing. The cutting deck baffle 60 is used in conjunction with the cutting deck 50 when the mower 100 is crushing lawn. The lawn discharging plate 70 is used in conjunction with the cutting deck 50 when the mower 100 is discharging the lawn. The linkage adjustment mechanism 80 is used to adjust and switch the cutting deck baffle 60 and the lawn discharging plate 70 so that a linkage is achieved between the cutting deck baffle 60 and the lawn discharging plate 70.

Please refer to FIG. 8 through FIG. 12. In this embodiment, an opening 501 is arranged on one side of the cutting deck 50, and the cutting deck baffle 60 is rotatably mounted at the opening 501. When the cutting deck baffle 60 is located at the opening 501 to close the opening 501, the mower 100 is in a lawn crushing state. In this embodiment, the cutting deck baffle 60 is rotatably connected with the cutting deck 50 through at least two bolts, axes of the two bolts are located on a same straight line, and the straight line is a rotation axis between the cutting deck baffle 60 and the cutting deck 50.

Please refer to FIG. 8 through FIG. 12. In this embodiment, the lawn discharging plate 70 is also rotatably mounted on the cutting deck 50. In an embodiment, a bracket 502 is fixedly mounted on the cutting deck 50 near the opening 501. The lawn discharging plate 70 is rotatably mounted together with the bracket 502 through a rotation shaft 71 of the lawn discharging plate, and the lawn discharging plate 70 is mounted on the rotation shaft 71 through an elastic cylindrical pin. When the mower 100 is in the lawn crushing state, which means when the cutting deck baffle 60 is located at the opening 501 to close the opening 501, the lawn discharging plate 70 is in an open state, which means that there is an angle between the cutting deck baffle 60 and the lawn discharging plate 70. In the present embodiment, the angle is, for example, set between 150° and 185°. It should be noted that, in this embodiment, a vertical height H between a rotation axis of the cutting deck baffle 60 and a rotation axis of the rotation shaft 71 of the lawn discharging plate is set between 35 mm and 45 mm. The vertical height H is set to 40 mm, for example, to avoid enabling an overall head height of the lawn discharging plate 70 too high and unable to adapt to the cutting deck 50, thereby affecting a lawn discharging performance.

Please refer to FIG. 8 through FIG. 12. In this embodiment, the linkage adjustment mechanism 80 is mounted on the mower 100, which is convenient for a linkage adjustment of the cutting deck baffle 60 and the lawn discharging plate 70. In an embodiment, the linkage adjustment mechanism 80 includes a connecting rod mechanism 81, a reset tension spring 82, a pulling wire 83 and a handle assembly 84. The connecting rod mechanism 81, the reset tension spring 82, the pulling wire 83 and the handle assembly 84 are all located on a same side of the cutting deck baffle 60 and the lawn discharging plate 70. The connecting rod mechanism 81 is connected between the cutting deck baffle 60 and the lawn discharging plate 70. The cutting deck baffle 60 is flipped upward through the connecting rod mechanism 81, and at the same time the lawn discharging plate 70 is flipped downward, so that the lawn discharging plate 70 and the cutting deck baffle 60 reach a lawn discharging position synchronously. The mower 100 is in the lawn discharging state. When the lawn discharging plate 70 and the cutting deck baffle 60 are located at the lawn discharging position, the lawn discharging plate 70 and the cutting deck baffle 60 are both in an approximately horizontal or horizontal position, so as to be used in conjunction with the cutting deck 50.

Please refer to FIG. 8 through FIG. 12. In this embodiment, the connecting rod mechanism 81 includes a first connecting rod 811, a second connecting rod 812 and a third connecting rod 813. The second connecting rod 812 is rotatably connected between the first connecting rod 811 and the third connecting rod 813, which means that a first end of the second connecting rod 812 is rotatably connected with the first connecting rod 811, and a second end of the second connecting rod 812 is rotatably connected with the third connecting rod 813. The first connecting rod 811 is connected with the rotation shaft 71 of the lawn discharging plate, and the third connecting rod 813 is fixedly connected with the cutting deck baffle 60. It should be noted that, in this embodiment, the third connecting rod 813 is located at one side of the cutting deck baffle 60 and is integrally formed with the cutting deck baffle 60 to ensure its structural strength.

Please refer to FIG. 8 through FIG. 12. In this embodiment, the first connecting rod 811 includes a first part 8111 and a second part 8112. There is an angle between the first part 8111 and the second part 8112. A first end of the second part 8112 is connected with the rotation shaft 71 of the lawn discharging plate, and a second end of the second part 8112 is connected with the second connecting rod 812. The connecting rod mechanism 81 can adjust positions of the cutting deck baffle 60 and the lawn discharging plate 70 to form a linkage structure between the cutting deck baffle 60 and the lawn discharging plate 70, so that the mower can switch between the lawn crushing state and the lawn discharging state. It should be noted that the first part 8111 and the second part 8112 are an integrally formed structure to ensure their structural strength.

Please refer to FIG. 8 through FIG. 12. In this embodiment, a first end of the reset tension spring 82 is connected with an outer side of the cutting deck 50, and a second end of the reset tension spring 82 is connected with the first connecting rod 811. In an embodiment, a lifting eye structure 503 is fixedly mounted on the outer side of the cutting deck 50. A first end of the reset tension spring 82 is fixedly connected with the lifting eye structure 503, and a second end of the reset tension spring 82 is fixedly connected with an end of the first part 8111 away from the second part 8112. Under an elastic force of the reset tension spring 82, the cutting deck baffle 60 may be flipped downward to be matched with the opening 501 on the side of the cutting deck 50 to close the opening 501. At the same time, the lawn discharging plate 70 is flipped upward, so that the mower 100 returns to the lawn crushing state.

Please refer to FIG. 8 through FIG. 12. In this embodiment, a length L4 of the second part 8112 of the first connecting rod 811 is set between 20 mm and 30 mm, a length L5 of the second connecting rod 812 is set between 35 mm and 45 mm, and a length L3 of the third connecting rod 813 is set between 25 mm and 35 mm. In this embodiment, the length L4 of the second part 8112 is set to 25 mm, for example, the length L5 of the second connecting rod 812 is set to 40 mm, and the length L6 of the third connecting rod 813 is set to 30 mm, for example, to ensure that the cutting deck baffle 60 and the lawn discharging plate 70 can be flipped to a suitable angle when flipping, so as to reach a specified position exactly, thereby realizing different functions.

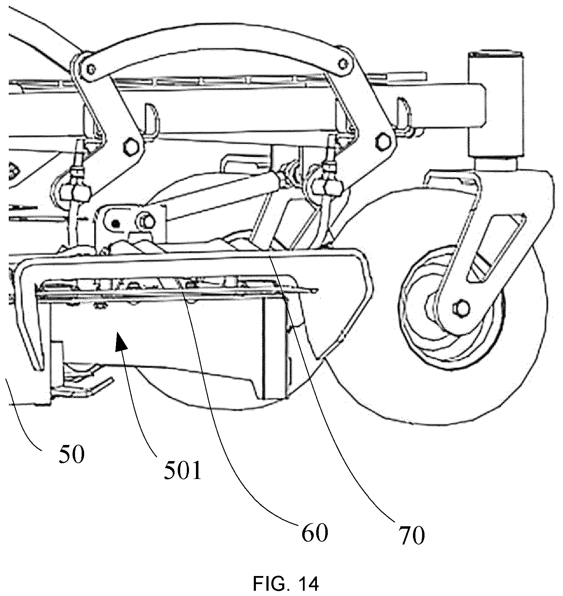

Please refer to FIG. 8 through FIG. 13. In this embodiment, a first end of the pulling wire 83 is fixedly connected with the first part 8111, a second end of the pulling wire 83 is connected with the handle assembly 84, and the handle assembly 84 is mounted on a control base assembly 1001 of the mower 100. The handle assembly 84 is rotated, and a pulling force of the pulling wire 83 drives the first connecting rod 811 to rotate, so that the cutting deck baffle 60 and the lawn discharging plate 70 are flipped in a direction close to each other, and the mower 100 is switched to the lawn discharging state. The mower 100 is in the lawn discharging state as shown in FIG. 14. When the handle assembly 84 is released, the first connecting rod 811 loses the pulling force of the pulling wire 83, and under an elastic force of the reset tension spring 82, the cutting deck baffle 60 and the lawn discharging plate 70 are flipped away from each other, so that the mower 100 is switched to the lawn crushing state. The mower 100 is in the lawn discharging state as shown in FIG. 8. It should be noted that, a boss 841 is arranged on one side of the handle assembly 84 close to the control base assembly 1001, and a plurality of positioning holes 1002 are correspondingly arranged on a housing of the control base assembly 1001. When the mower is in the lawn crushing state or the lawn discharging state, the handle assembly 84 is matched with the different positioning holes 1002 through the boss 841 to limit the handle assembly 84 to different positions, thereby facilitating a switching and an adjustment between the cutting deck baffle 60 and the lawn discharging plate 70.

Please refer to FIG. 8 through FIG. 14. In this embodiment, initially, under the elastic action of the reset tension spring 82, the cutting deck baffle 60 is matched with the opening 501 on the side of the cutting deck 50 to close the opening 51, and at the same time enables the lawn discharging plate 70 to be in an open state. At this time, the mower 100 is in the lawn crushing state. At this time, there is an angle between the cutting deck baffle 60 and the lawn discharging plate 70, and the angle is set between 150° and 185°, for example, set to 160°. When it is necessary to switch to the lawn discharging state, the handle assembly 84 is rotated, and the first connecting rod 811 is pulled by the pulling wire 83. Through a transmission relationship between the first connecting rod 811, the second connecting rod 812 and the third connecting rod 813, the cutting table blocking plate 60 is driven to flip upward around its rotation axis, and at this time, the lawn discharging plate 70 is driven to flip downward around the rotation shaft 71 of the lawn discharging plate. In an embodiment, an upward flipping angle of the cutting deck baffle 60 relative to a position of the cutting deck baffle 60 when the mower 100 in the lawn crushing state is set between 90° and 98°, and a downward flipping angle of the lawn discharging plate 70 relative to a position of the lawn discharging plate 70 of the mower 100 in the lawn crushing state is set between 65° and 96°. For example, the cutting deck baffle 60 is flipped upward by 90°, for example, the lawn discharging plate 70 is flipped downward by 71°, so that the cutting deck baffle 60 and the lawn discharging plate 70 are both in a horizontal or approximately horizontal position, and the mower 100 is in the lawn discharging plate.

The disclosure provides the mower, which reduces a number of components of the platform assembly and eliminates two rubber blocks that play a limiting role. The disclosure mounts the damper between the platform and the supporting plate, so that the entire platform assembly can provide a shock reduction functions during an operation of a standing mower. Compared with a performance of traditional platform assemblies under bumpy conditions, this platform assembly can provide a more effective shock reduction function, which brings customers a more perfect experience.

The disclosure provides the mower. The lawn discharging plate and the cutting deck baffle are mounted on the cutting deck. The lawn discharging plate and the cutting deck baffle are linked and adjusted through the linkage adjustment mechanism, so that the cutting deck baffle can be switched on an operating deck without the driver getting off a mowing vehicle, and the lawn discharging plate work synchronously, which means that when the cutting deck baffle is not needed, the cutting deck baffle does not need to be removed, only the cutting deck baffle needs to be opened and the lawn discharging plate is lowered at the same time. When the cutting deck baffle is needed, the cutting deck baffle may be directly lowered and the lawn discharging plate may be raised at the same time. The disclosure does not use tools to disassemble the cutting deck baffle, and the cutting deck baffle and the lawn discharging plate are linked. When the blocking plate is not working, the lawn discharging plate is working. When the lawn discharging plate is not working, the cutting deck baffle is working.

The above description is only a preferred embodiment of the disclosure and an explanation of the technical principle used. Those skilled in the art should understand that a disclosure scope involved in this disclosure is not limited to the technical solutions formed by the specific combination of the above technical features. At the same time, it should also cover other technical solutions formed by any combination of the above technical features or their equivalent features without departing from a concept of the disclosure, such as a technical solution formed by replacing the above-mentioned features with technical features with similar functions disclosed in (but not limited to) this disclosure.

Except for the technical features described in the specification, the remaining technical features are known to those skilled in the art, in order to highlight the innovative features of the disclosure, the remaining technical features will not be repeated herein.

## Claims

1. A mower, comprising:
a frame;
a working assembly, connected with the frame; and
a platform assembly, connected to the frame, and comprising:
a supporting plate, fixedly connected with the frame;
a platform, one side of the platform rotatably connected with the frame and located above the supporting plate; and
a damper, mounted on the supporting plate and located between the platform and the supporting plate.

2. The mower according to claim 1, wherein, the damper comprises at least a first damper and a second damper, and the first damper and the second damper are respectively mounted on two sides of the supporting plate.

3. The mower according to claim 1, wherein, a distance L1 between an orthographic projection on the supporting plate of a rotation center of the platform rotatably connected with the frame and the damper is set between 180 mm and 200 mm.

4. The mower according to claim 1, wherein, a plurality of mounting holes is arranged on one side of the platform, and the damper is mounted on different mounting holes through fixing components.

5. The mower according to claim 4, wherein, the plurality of the mounting holes is arranged in a straight line along a width direction of the supporting plate, and a maximum distance L2 between two of the plurality of mounting holes is set to 100 mm.

6. The mower according to claim 1, wherein, when a driver stands on the platform, a distance L3 between an orthographic projection on the supporting plate of a rotation center of the platform rotatably connected with the frame and the driver's center of gravity is set between 80 mm and 100 mm.

7. The mower according to claim 2, further comprising a compression spring assembly, mounted between the platform and the supporting plate, and located between the first damper and the second damper.

8. The mower according to claim 7, wherein, the compression spring assembly comprises a pressing plate and a spring, a first end of the spring is fixedly connected with the pressing plate through a first bolt, and a second end of the spring is fixedly connected with the supporting plate through a second bolt.

9. The mower according to claim 8, wherein, the spring comprises at least a first spring and a second spring, and the first spring and the second spring are symmetrically arranged on two sides of the pressing plate with respect to a center line of the pressing plate.

10. The mower according to claim 1, further comprising an elastic component, connected between the frame and the platform.

11. The mower according to claim 10, wherein, a first end of the elastic component is fixedly mounted on the platform through a first limiting bolt, and a second end of the elastic component is fixedly mounted on the frame through a second limiting bolt, and the first limiting bolt is located on a side of the platform away from a rotation shaft of the platform.

12. The mower according to claim 1, further comprising an operator presence switch, arranged on the platform assembly.

13. The mower according to claim 1, wherein, the working assembly comprises:
a cutting deck, connected on the frame and one side of the cutting deck provided with an opening;
a cutting deck baffle, rotatably mounted at the opening, and when the cutting deck baffle is located at the opening to close the opening, the mower being in a lawn crushing state;
a lawn discharging plate, rotatably mounted with the cutting deck through a rotation shaft of the lawn discharging plate; and
a linkage adjustment mechanism, mounted on the frame, connected with the cutting deck baffle and the lawn discharging plate, and comprising a connecting rod mechanism, the connecting rod mechanism connected between the cutting deck baffle and the lawn discharging plate, and the linkage adjustment mechanism configured to adjust positions of the lawn discharging plate and the cutting deck baffle through the connecting rod mechanism to enable the mower to switch between the lawn crushing state and a lawn discharging state.

14. The mower according to claim 13, wherein, in the lawn crushing state, an angle between the cutting deck baffle and the lawn discharging plate is set between 150° and 185°.

15. The mower according to claim 13, wherein, when the mower switches from the lawn crushing state to the lawn discharging state, an upward flipping angle of the cutting deck baffle is set between 90° and 98°, and a downward flipping angle of the lawn discharging plate is set between 65° and 96°.

16. The mower according to claim 13, wherein, the connecting rod mechanism comprises a first connecting rod, a second connecting rod and a third connecting rod, a first end of the second connecting rod is rotatably connected with the first connecting rod, a second end of the second connecting rod is rotatably connected with the third connecting rod, the first connecting rod is connected with the rotation shaft of the lawn discharging plate, and the third connecting rod is fixedly connected with the cutting deck baffle.

17. The mower according to claim 16, wherein, the first connecting rod comprises a first part and a second part, an angle is formed between the first part and the second part, the first part and the second part are in an integrally formed structure, a first end of the second part is connected with the rotation shaft of the lawn discharging plate, and a second end of the second part is connected with the second connecting rod.

18. The mower according to claim 17, wherein, a length of the second part is set between 20 mm and 30 mm, a length of the second connecting rod is set between 35 mm and 45 mm, and a length of the third connecting rod is set between 25 mm and 35 mm.

19. The mower according to claim 18, wherein, the linkage adjustment mechanism further comprises a reset tension spring, a first end of the reset tension spring is connected with an outer side of the cutting deck, and a second end of the reset tension spring is connected with an end of the first part away from the second part.

20. The mower according to claim 18, wherein, the linkage adjustment mechanism further comprises a pulling wire and a handle assembly, a first end of the pulling wire is fixedly connected with the first part, a second end of the pulling wire is connected with the handle assembly, and the handle assembly is mounted on a control base assembly of the mower.
